# FASCICULE DE BREVET EUROPEEN

(11) **EP 2 896 878 B1**
(45) Date de publication et mention de la délivrance du brevet: **12.04.2023**
(21) Numéro de dépôt: 15151040.1
(22) Date de dépôt: 14.01.2015
(51) Int. Cl.: F21S 41/29, F21S 43/237, F21S 43/241, F21S 43/243, F21S 41/24, F21S 43/249

(54) **Guide de lumière pour dispositif d'éclairage et/ou de signalisation**
Lichtleiter für Beleuchtungs- und/oder Signalvorrichtung
Light guide for a lighting and/or signalling device

(30) Priorité: 15.01.2014 FR 1450303
(43) Date de publication de la demande: 22.07.2015
(73) Titulaire: VALEO ILUMINACION, 23600 Martos (ES)
(72) Inventeur: Garcia Alegre, Isidro Manuel, 23600 JAEN (ES); Moisy, Eric, 23009 JAEN (ES); Martinez, Juan Manuel, 18014 GRANADA (ES); Zambrana, Pedro, 23410 Sabiote Jaen (ES); Reyes, Antonio, 23420 Caneda Jaén (ES)
(74) Mandataire: Valeo Visibility

(56) Documents cités:
- EP-A1- 1 072 382
- EP-A1- 2 161 494
- EP-A1- 2 530 503
- EP-A2- 0 515 921
- EP-A2- 2 489 550
- EP-A2- 2 525 139
- DE-A1-102006 035 842
- DE-A1-102011 015 012
- DE-A1-102011 051 045
- DE-A1-102012 007 227

## Description

La présente invention concerne un dispositif de guidage de lumière pour dispositif d'éclairage et/ou de signalisation, un dispositif d'éclairage et/ou de signalisation comprenant ledit dispositif et un bloc optique pour véhicule à moteur comprenant l'un au moins desdits dispositifs. Elle est en particulier destinée aux feux de position et/ou d'éclairage diurne, clignotant ou feux stop.

Dans ce domaine, les constructeurs souhaitent se singulariser, notamment avec des éléments visuellement originaux, afin d'être identifiables plus facilement par rapport aux concurrents.

Des technologies récentes ont été mises au point, avec des dispositifs munis d'une source lumineuse, en général une diode électroluminescente, et un guide de lumière à travers lequel se propage un faisceau lumineux issu de la source. La lumière se propage dans le guide par réflexion totale jusqu'à une face de sortie, qui projette la lumière de façon à être vue par les véhicules qui suivent ou qui précèdent.

Dans le domaine automobile, de tels dispositifs sont appréciés car ils permettent de proposer une grande variété de formes et de types de lumière, associant un design original à une compacité notable.

De tels dispositifs sont divulgués dans les documents DE 102011051045 A, DE 102012007227 A et EP 2161494 A.

Cependant, suivant la configuration de ces guides de lumière, des risques de points lumineux de forte intensité sont générés, par exemple en extrémité de guide et/ou au voisinage de zones anguleuses. Ces points créent des inhomogénéités dans la diffusion de la lumière et altèrent la qualité perçue par les utilisateurs.

Il est connu de masquer localement un guide lumineux à l'aide d'un ruban. Cette solution présente cependant l'inconvénient d'être complexe à mettre en oeuvre dans un domaine industriel où les contraintes de fabrication sont élevées.

L'invention vise donc une solution économique, aisée et rapide à mettre en oeuvre afin d'éviter les zones de forte intensité lumineuse au niveau d'un guide de lumière.

Pour cela, l'invention propose un dispositif de guidage de lumière pour dispositif d'éclairage et/ou de signalisation selon la revendication indépendante 1.

Selon l'invention, le dispositif de guidage de lumière pour dispositif d'éclairage et/ou de signalisation comprend un guide, configuré pour transmettre la lumière émise par une source lumineuse, et une pièce opaque positionnée vis-à-vis dudit guide pour intercepter la lumière se propageant dans ledit guide.

L'utilisation d'une pièce opaque qui empêche la propagation de la lumière à l'intérieur du guide permet de diminuer les risques de points lumineux de forte intensité à la surface du guide de lumière.

D'autre part, l'invention ouvre de nouvelles possibilités concernant l'aspect esthétique, notamment pour les concepteurs et designers automobiles, grâce à une technologie innovante, celle des guides de lumières, qui ne présentent plus d'inhomogénéité en fonctionnement.

Selon l'invention, ladite pièce opaque est située à l'intérieur dudit guide, en une zone présentant une rupture le long dudit guide, ladite rupture étant un angle formant une arrête vive.

Avantageusement, ladite pièce opaque est placée à une extrémité du guide, ladite extrémité étant opposée à l'extrémité par laquelle la lumière est émise dans ledit guide.

Avantageusement, ledit guide comprend au moins deux branches, ledit dispositif étant configuré tel que la pièce opaque est placée à l'intersection desdites branches dudit guide, chacune desdites branches dudit guide de lumière étant destinée à être alimentée par une source lumineuse située à l'extrémité opposée de la zone d'intersection entre lesdites branches.

La création d'une zone d'union opaque entre les différentes branches d'un même guide de lumière à l'aide d'une unique pièce permet de réduire les coûts, le risque industriel et de montage de systèmes en plusieurs sous-ensembles.

Selon différents modes de réalisation de l'invention, qui pourront être pris ensemble ou séparément :
- ledit guide se présente sous la forme d'un cordon,
- la pièce opaque est en matériau rigide, notamment plastique, métallique ou céramique,
- la pièce opaque et le guide sont de la même famille de matériaux,
- le matériau commun, utilisé pour le moulage de la pièce opaque et du guide, est le Polyméthacrylate de méthyle (PMMA) ou le Polycarbonate (PC),
- la pièce opaque est obtenue par moulage par injection,
- le guide est surmoulé autour de ladite pièce opaque,
- le guide est surmoulé par nappage, ou moulé par bi-injection, dans le moule utilisé pour le moulage de la pièce opaque,
- la ou les branches du guide sont obtenues par injection de matière autour de ladite pièce opaque,
- les surfaces de la pièce opaque comprennent des reliefs issus de matière avec ladite pièce opaque, tels que des stries, des godrons, des prismes, ou encore, un réseau de multiples demi-sphères accolées,
- lesdits reliefs présentent des faces configurées pour être orientées orthogonalement à un axe d'extension longitudinal du guide,
- ladite pièce opaque se prolonge à l'extérieur du guide par un moyen apte à maintenir en position ledit dispositif à l'intérieur d'un ensemble mécanique,
- ledit moyen de maintien en position est une patte de fixation issue de matière avec ladite pièce opaque.

Avantageusement, l'invention concerne aussi un dispositif d'éclairage et/ou de signalisation, comprenant au moins un dispositif tel que décrit ci-dessus. Avantageusement, ledit dispositif d'éclairage et/ou de signalisation, comprend au moins une source lumineuse disposée en vis-à-vis d'une face d'entrée du guide. Avantageusement, ladite au moins une source lumineuse est une diode électroluminescente.

Avantageusement, l'invention concerne également un bloc optique, pour véhicule à moteur, comprenant au moins un dispositif tel que décrit ci-dessus.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue schématique, en perspective, d'un guide présentant une zone angulaire telle qu'une arrête vive,
- la figure 2 est une vue schématique, en perspective, d'un guide présentant la même zone qu'à la figure 1 et qui montre une pièce opaque selon l'invention,
- la figure 3 est une vue en perspective de ladite pièce opaque visible sur la figure 2,
- la figure 4 est une vue de détail, en perspective, d'une partie de la figure 2.

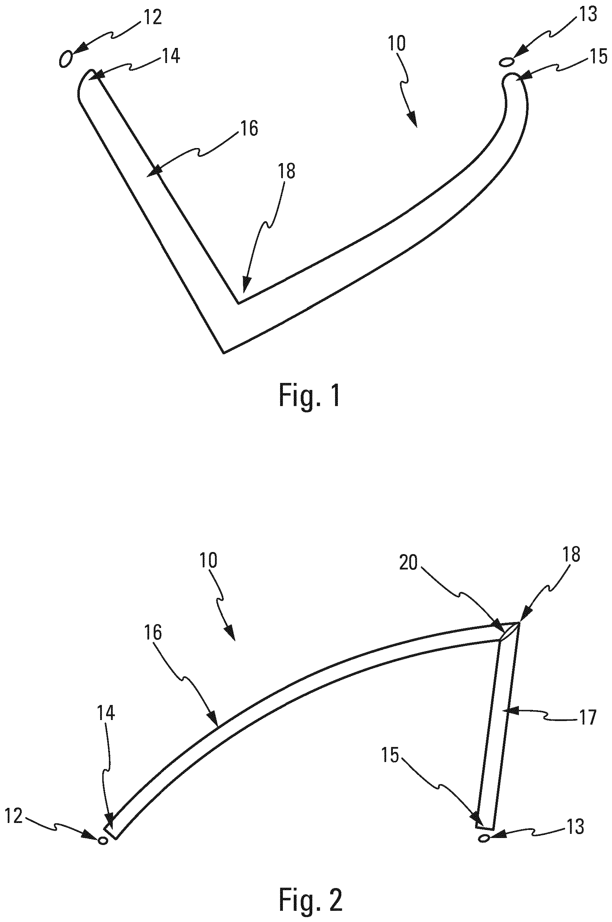

La figure 1 montre un guide de lumière 10 qui présente une zone angulaire 18. Ce guide 10 est configuré pour transmettre la lumière émise par au moins une source lumineuse 12, 13 placée à l'une au moins de ses extrémités 14, 15. Un tel guide transmet, par réflexion totale la lumière émise par la, ou les sources lumineuses 12, 13.

Un tel guide 10 se présente ici sous la forme d'un cordon et se compose d'un élément cylindrique ou ovoïde 16, guidant la lumière par l'intermédiaire d'une matière transparente, notamment plastique. Cette matière plastique transparente est, de préférence, du Polyméthacrylate de méthyle (PMMA) ou du Polycarbonate (PC). La lumière entre dans le guide 10 par une, ou par les deux extrémités 14, 15 de celui-ci, afin de créer un élément émettant de la lumière sur la longueur du guide 10.

L'émission de la lumière sur la longueur du guide 10 à partir de la lumière qui circule dans le guide 10 s'effectue, par exemple, au niveau d'une face de sortie, opposée à une face de réflexion munie de motifs optiques pour dévier la lumière selon un angle incident lui permettant de sortir du guide par la face de sortie, comme cela est bien connu de l'homme du métier.

Il a été constaté des pics d'intensité lumineuse lorsque ce guide 10 présente une zone angulaire 18 telle qu'une arrête vive. Le pic d'intensité lumineuse est alors constaté au niveau de ladite zone angulaire 18.

L'invention consiste à créer une zone d'union opaque, ne permettant pas à la lumière de passer au niveau de ladite zone angulaire et, ainsi, de diminuer les risques de pics d'intensité lumineuse à l'intérieur du guide de lumière 10. Ladite zone pourra être formée notamment par des techniques de bi-injection ou de surmoulage par nappage.

En se référant à la figure 2, on constate une pièce opaque 20, rigide, positionnée vis-à-vis dudit guide 10 pour intercepter la lumière se propageant à l'intérieur. Ladite pièce opaque 20 est située à l'intérieur dudit guide 10, en une zone présentant une rupture le long dudit guide. Une telle zone de rupture peut être une zone angulaire 18, voire l'extrémité du guide lorsque ledit guide ne présente aucune zone angulaire 18.

La pièce opaque 20 ne permet plus à la lumière de passer lorsqu'elle est située à l'intersection 18 des deux branches 16, 17 d'un guide 10, chacune de ces deux branches 16, 17 étant alimentée par une source lumineuse 12, 13. Ladite pièce opaque 20 diminue ainsi les risques de points de forte intensité lumineuse en cette zone d'intersection 18 en interrompant les réflexions de lumière à l'intérieur du guide.

Ladite pièce opaque 20 peut être en matériau métallique ou céramique. Cependant, elle sera fabriquée de préférence par injection de matière plastique. Dans ce cas, la couleur du plastique peut être choisie en fonction de l'environnement du guide 10, ceci dans le but de dissimuler et de réduire la perception de cette partie opaque 20 à l'utilisateur.

D'autre part, la pièce opaque 20 et le guide 10 seront, de préférence, fabriqués en matériaux de la même famille. Cela signifie que la pièce opaque 20 sera injectée, de préférence, en Polyméthacrylate de méthyle (PMMA) ou en Polycarbonate (PC).

Cela présente l'avantage de diminuer les coûts de fabrication d'un tel dispositif de guidage de lumière. En effet, si ces deux éléments sont fabriqués dans la même matière plastique, ils peuvent être injectés dans le même moule, de manière successive, voire simultanée.

Il peut être envisagé, une fois la pièce opaque 20 obtenue, de surmouler les branches 16, 17 du guide 10 par nappage, voire d'injecter lesdites branches 16, 17 bord à bord sur ladite pièce opaque 20. Dès lors, l'épaisseur de ce surmoulage autour de ladite pièce opaque 20 sera de l'ordre de 1mm. Une telle épaisseur résiduelle permet d'observer l'interruption de la réflexion de lumière dans le guide tout en offrant une bonne fixation de la pièce opaque.

Il est intéressant de noter que l'industrialisation d'un tel procédé est aisée.

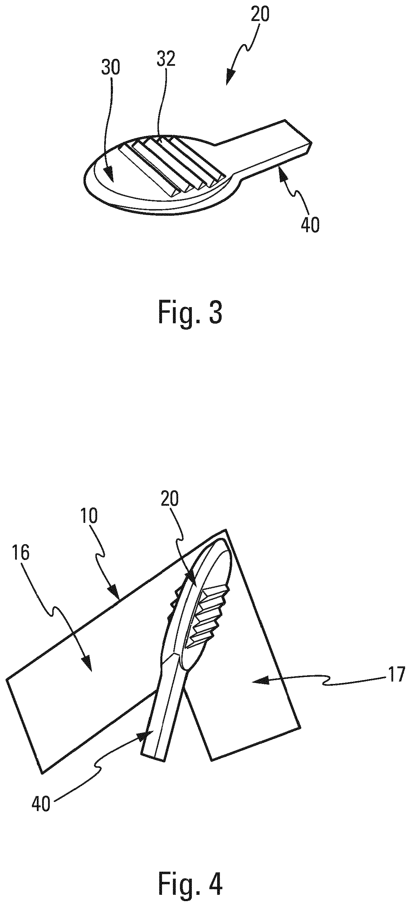

En se référant à la figure 3, on constate que la surface 30 de la pièce opaque 20 présente des reliefs. La pièce opaque 20 dispose de deux faces, donc de deux surfaces 30 qui présentent les mêmes caractéristiques fonctionnelles, quand bien même la figure 3 ne montre qu'une seule de ces deux faces.

La surface 30 représentée sur la figure 3 présente des reliefs 32, issues de matière avec ladite pièce opaque 20, tels que des stries, des prismes, des godrons (variante non représentée), ou encore, un réseau de multiples demi-sphères accolées (variante non représentée). Lesdits reliefs 32 présentent avantageusement des faces configurées pour être orientées orthogonalement à un axe d'extension longitudinal du guide 10.

Un godron présente une structure extérieure cylindrique. Dans le cas présent, bien que non représenté, lorsque la surface 30 de la pièce opaque présente des reliefs 32 tels que des godrons, cela signifie que ladite surface 30 est munie d'un réseau de demi-cylindres accolés ou non accolés.

Lesdits reliefs 32, quelque soit leur forme, ont pour fonction de réduire localement les risques de diffusion de la lumière réfléchie. En se référant à la figure 4, on constate que la pièce opaque se prolonge à l'extérieur du guide 10 par une patte de fixation 40 issue de matière avec ladite pièce opaque 20.

Cette patte de fixation 40 présente un double intérêt. Issue de matière avec la pièce opaque 20, elle permet de ne pas altérer la fonction d'interception de la lumière se propageant dans les branches 16, 17 du guide 10. Cette patte de fixation 40 permet aussi de maintenir en position l'ensemble guide 10 et pièce opaque 30 à l'intérieur d'un ensemble mécanique. Ce dernier point est particulièrement intéressant lorsque le dispositif de guidage de lumière décrit ci-dessus est destiné à être intégré dans au moins un dispositif d'éclairage et/ou de signalisation d'un bloc optique de véhicule à moteur.

En effet, il est connu que les blocs optiques de véhicule à moteur subissent des vibrations importantes. Lesdites vibrations impliquent de fortes contraintes, de maintien en position pour les dispositifs d'éclairage et/ou de signalisation intégrés auxdits blocs optiques. Une telle patte de fixation 40 permet donc de s'affranchir d'un assemblage complexe d'un système en plusieurs sous-ensembles.

Par ailleurs, ladite patte de fixation 40 pourra servir de bride de maintien lors de l'injection de la matière du guide, dans le moule d'injection.

Le dispositif de guidage de lumière décrit ci-dessus présente plusieurs avantages. Tout d'abord il permet de réduire les points de forte intensité lumineuse dans un guide de lumière. Il assure le maintien en position de l'ensemble lorsque celui-ci est destiné à être monté dans un environnement mécanique. Il diminue les risques de style en proposant un dispositif de guidage de lumière homogène et intégré. Il cumule au moins deux fonctions en une unique pièce, la pièce opaque, et donc, permet la réduction de références sur l'ensemble d'un produit auquel il est destiné, tel qu'un bloc optique pour véhicule à moteur. Il permet ainsi de limiter les coûts associés à sa mise en place.

Une autre fonction importante de la pièce opaque 20 est d'empêcher la lumière de s'échapper au niveau de l'extrémité du guide ou de l'angle 18. En l'absence de pièce 20, cette lumière pourrait être incidente sur le ou les masques environnant le guide 10 et elle y créerait un ou plusieurs spots lumineux. La présente invention permet d'éviter de tels rayons lumineux parasites

Il est à noter que des variantes de réalisation sont bien sûr possibles. Notamment il est aussi envisageable, dans un autre mode de réalisation, que la patte de fixation 40 ne soit pas issue de matière avec ladite pièce opaque 20.

## Revendications

1. - Dispositif de guidage de lumière pour dispositif d'éclairage et/ou de signalisation comprenant un guide (10), configuré pour transmettre la lumière émise par une source lumineuse (12, 13), et une pièce opaque (20) positionnée vis-à-vis dudit guide (10) pour intercepter la lumière se propageant dans ledit guide (10),
**caractérisé en ce que** ladite pièce opaque (20) est située à l'intérieur dudit guide (10), en une zone (18) présentant une rupture le long dudit guide, ladite rupture étant un angle formant une arrête vive, et **en ce que** ladite pièce opaque (20) se prolonge à l'extérieur du guide (10).

2. - Dispositif de guidage selon la revendication 1, dans lequel ladite pièce opaque (20) est placée à une extrémité du guide, ladite extrémité étant opposée à l'extrémité par laquelle la lumière est émise dans ledit guide (10).

3. - Dispositif de guidage selon la revendication 1, dans lequel ledit guide (10) comprend au moins deux branches (16, 17), ledit dispositif étant configuré tel que la pièce opaque (20) est placée à l'intersection desdites branches (16, 17) dudit guide.

4. - Dispositif de guidage selon l'une des revendications précédentes, dans lequel le guide (10) est surmoulé autour de ladite pièce opaque (20).

5. - Dispositif de guidage selon la revendication 3, dans lequel la ou les branches (16, 17) du guide (10) sont obtenues par injection de matière autour de ladite pièce opaque (20).

6. - Dispositif de guidage selon l'une des revendications précédentes, dans lequel la pièce opaque (20) et le guide (10) sont de la même famille de matériaux.

7. - Dispositif de guidage selon l'une des revendications 1 à 5, dans lequel la pièce opaque (20) est en matériau plastique, métallique ou céramique.

8. - Dispositif de guidage selon l'une des revendications précédentes, dans lequel les surfaces (30) de la pièce opaque (20) comprennent des reliefs (32) issues de matière avec ladite pièce opaque (20), tels que des stries.

9. - Dispositif de guidage selon la revendication précédente, dans lequel lesdits reliefs (32) présentent des faces configurées pour être orientées orthogonalement à un axe d'extension longitudinal du guide (10).

10. - Dispositif de guidage selon l'une des revendications précédentes, dans lequel ladite pièce opaque (20) se prolonge à l'extérieur du guide (10) par une patte de fixation (40) issue de matière avec ladite pièce opaque (20).

11. - Dispositif d'éclairage et/ou de signalisation, comprenant au moins un dispositif selon l'une des revendications précédentes.

12. - Dispositif d'éclairage et/ou de signalisation selon la revendication précédente, comprenant au moins une source lumineuse (12, 13) disposée en vis-à-vis d'une face d'entrée du guide (10).

13. - Bloc optique pour véhicule à moteur, comprenant au moins un dispositif selon l'une des revendications précédentes.

## Patentansprüche

1. Vorrichtung zum Leiten von Licht für eine Beleuchtungs- und/oder Signalvorrichtung, beinhaltend einen Leiter (10), der dazu konfiguriert ist, das Licht, das durch eine Lichtquelle (12, 13) emittiert wird, zu übertragen, und ein lichtundurchlässiges Teil (20), das gegenüber dem Leiter (10) positioniert ist, um das Licht, das sich in dem Leiter (10) ausbreitet, abzufangen, **dadurch gekennzeichnet, dass** sich das lichtundurchlässige Teil (20) im Inneren des Leiters (10) in einem Bereich (18) befindet, der eine Ruptur entlang des Leiters darstellt, wobei die Ruptur ein Winkel ist, der eine scharfe Kante bildet, und dass sich das lichtundurchlässige Teil (20) auf der Außenseite des Leiters (10) fortsetzt.

2. Leitvorrichtung nach Anspruch 1, wobei das lichtundurchlässige Teil (20) an einem Ende des Leiters platziert ist, wobei das Ende demjenigen Ende gegenüberliegt, durch das das Licht in den Leiter (10) emittiert wird.

3. Leitvorrichtung nach Anspruch 1, wobei der Leiter (10) mindestens zwei Arme (16, 17) beinhaltet, wobei die Vorrichtung so konfiguriert ist, dass das lichtundurchlässige Teil (20) an der Schnittstelle der Arme (16, 17) des Leiters platziert ist.

4. Leitvorrichtung nach einem der vorhergehenden Ansprüche, wobei der Leiter (10) auf das lichtundurchlässige Teil (20) aufgeformt ist.

5. Leitvorrichtung nach Anspruch 3, wobei der oder die Arme (16, 17) des Leiters (10) durch das Einspritzen von Material um das lichtundurchlässige Teil (20) herum erhalten werden.

6. Leitvorrichtung nach einem der vorhergehenden Ansprüche, wobei das lichtundurchlässige Teil (20) und der Leiter (10) aus derselben Materialfamilie bestehen.

7. Leitvorrichtung nach einem der Ansprüche 1 bis 5, wobei das lichtundurchlässige Teil (20) aus einem Kunststoff-, Metall- oder Keramikmaterial besteht.

8. Leitvorrichtung nach einem der vorhergehenden Ansprüche, wobei die Oberflächen (30) des lichtundurchlässigen Teils (20) Reliefs (32), wie etwa Riefen, beinhalten, die mit dem lichtundurchlässigen Teil (20) einstückig ausgebildet sind.

9. Leitvorrichtung nach dem vorhergehenden Anspruch, wobei die Reliefs (32) Flächen aufweisen, die dazu konfiguriert sind, zu einer Längserstreckungsachse des Leiters (10) orthogonal ausgerichtet zu sein.

10. Leitvorrichtung nach einem der vorhergehenden Ansprüche, wobei sich das lichtundurchlässige Teil (20) auf der Außenseite des Leiters (10) durch eine Befestigungslasche (40) fortsetzt, die mit dem lichtundurchlässigen Teil (20) einstückig ausgebildet ist.

11. Beleuchtungs- und/oder Signalvorrichtung, die mindestens eine Vorrichtung nach einem der vorhergehenden Ansprüche beinhaltet.

12. Beleuchtungs- und/oder Signalvorrichtung nach dem vorhergehenden Anspruch, die mindestens eine Lichtquelle (12, 13) beinhaltet, die gegenüber einer Einlassseite des Leiters (10) angeordnet ist.

13. Optikblock für ein Kraftfahrzeug, der mindestens eine Vorrichtung nach einem der vorhergehenden Ansprüche beinhaltet.

## Claims

1. Light-guiding device for a lighting and/or signalling device comprising a guide (10), configured to transmit the light emitted by a light source (12, 13), and an opaque part (20) positioned opposite said guide (10) to intercept the light being propagated in said guide (10),
**characterized in that** said opaque part (20) is situated inside said guide (10), in a zone (18) exhibiting a break along said guide, said break being an angle forming a sharp edge, and **in that** said opaque part (20) is prolonged outside of the guide (10).

2. Guiding device according to Claim 1, wherein said opaque part (20) is placed at an end of the guide, said end being opposite the end by which the light is emitted in said guide (10).

3. Guiding device according to Claim 1, wherein said guide (10) comprises at least two branches (16, 17), said device being configured such that the opaque part (20) is placed at the intersection of said branches (16, 17) of said guide.

4. Guiding device according to one of the preceding claims, wherein the guide (10) is overmoulded around said opaque part (20).

5. Guiding device according to Claim 3, wherein the branch or branches (16, 17) of the guide (10) are obtained by material injection around said opaque part (20).

6. Guiding device according to one of the preceding claims, wherein the opaque part (20) and the guide (10) are from the same family of materials.

7. Guiding device according to one of Claims 1 to 5, wherein the opaque part (20) is made of a plastic, metallic or ceramic material.

8. Guiding device according to one of the preceding claims, wherein the surfaces (30) of the opaque part (20) comprise reliefs (32) made of a piece with said opaque part (20), such as striations.

9. Guiding device according to the preceding claim, wherein said reliefs (32) have faces configured to be oriented orthogonally to a longitudinal axis of extension of the guide (10).

10. Guiding device according to one of the preceding claims, wherein said opaque part (20) is prolonged outside of the guide (10) by a fixing lug (40) made of a piece with said opaque part (20).

11. Lighting and/or signalling device, comprising at least one device according to one of the preceding claims.

12. Lighting and/or signalling device according to the preceding claim, comprising at least one light source (12, 13) disposed opposite an input face of the guide (10) .

13. Optical block for a motor vehicle, comprising at least one device according to one of the preceding claims.
